# EUROPEAN PATENT APPLICATION

(11) **EP 1 970 835 A1**
(43) Date of publication of application: **17.09.2008**
(21) Application number: 07251082.9
(22) Date of filing: 15.03.2007
(51) Int. Cl.: G06F 21/24, H04L 29/06, H04L 29/08

(54) **Method and apparatus for secure web browsing**

(71) Applicant: Lucent Technologies Inc., Murray Hill, New Jersey 07974-0636 (US)
(72) Inventor: Ramirez, David, Ashford, Kent TN23 3RS (GB)
(74) Representative: Cockayne, Gillian

(57) **Abstract**

The invention includes a method and apparatus for protecting a user device from web attacks using a proxy server. In one embodiment, a method includes receiving a web page comprising web page content and code, generating an image-based representation of the web page that includes the web page content and excludes the code, and propagating the image-based representation of the web page toward the user device. In one embodiment, a method includes receiving an interaction with an image-based representation of a web page, generating a web page interaction from the interaction with the image-based representation of the web page, implementing the web page interaction, generating an instruction using the implemented web page interaction, and propagating the instruction toward a web server,

## Description

### FIELD OF THE INVENTION

The invention relates to the field of communication networks and, more specifically, to secure web browsing.

### BACKGROUND OF THE INVENTION

The Internet allows users to browse web sites which host web pages including various types of information. A user browses web pages using a web browser associated with a user device, which requests, receives, and presents web pages to the user. Unfortunately, however, many websites and associated web pages include malicious code, such as viruses, malware, spyware, and other malicious code, which is downloaded to user devices and executed by the user devices, thereby infecting the user devices. Specifically, new trends of viruses, malware, and spyware involve using infected software code (e.g., Java, ActiveX, and the like) to initiate attacks on user devices. The attacks may include crashing the user device, stealing information stored on the user device, collecting Internet-usage trend information, and various other attacks.

There are many existing solutions which attempt to prevent web browser attacks using viruses, malware, and spyware, or to limit the effects of attacks using viruses, malware, and spyware. With respect to locally-based solutions, many companies develop software, executed locally on the user device, which attempts to block execution of web browser attacks (e.g., antivirus software, anti-spyware software, and the like). With respect to network-based solutions, many companies have developed software applications that analyze the traffic on the network and block some types of dangerous or malicious code (e.g., web based antivirus, web filters, network-based anti-spyware). These network-based solutions typically rely on proxy servers operating as intermediaries between web servers and user devices. The proxy servers attempt to filter any dangerous or malicious code from being transferred between the web servers and user devices by using the network-bases solutions to inspect communication payload before allowing the communication payload to reach the destination.

Disadvantageously, software which attempts to block execution of web browser attacks often becomes outdated quickly as new viruses, malware, spyware, and like attacks is constantly being developed. Similarly, although proxy servers can operate as filters for web pages sent from web servers to user devices, ultimately, proxy servers still send web pages from web servers to user devices, and, thus, still pose a critical risk. Furthermore, deploying a combination of existing solutions which provides the best possible protection is difficult for individual, small companies, and, often, even medium size companies. Moreover, even for large companies which can afford to implement various combinations of existing solutions, combinations of existing solutions still leave vulnerabilities that are constantly exploited for malicious purposes.

### SUMMARY OF THE INVENTION

Various deficiencies in the prior art are addressed through the invention of a method and apparatus for protecting a user device from web attacks using a proxy server. In one embodiment, a method includes receiving a web page comprising web page content and code, generating an image-based representation of the web page that includes the web page content and excludes the code, and propagating the image-based representation of the web page toward the user device. In one embodiment, a method includes receiving an interaction with an image-based representation of a web page, generating a web page interaction from the interaction with the image-based representation of the web page, implementing the web page interaction, generating an instruction using the implemented web page interaction, and propagating the instruction toward a web server.

### BRIEF DESCRIPTION OF THE DRAWINGS

The teachings of the present invention can be readily understood by considering the following detailed description in conjunction with the accompanying drawings, in which:
FIG. 1 depicts a high-level block diagram of a communication network including one proxy server facilitating web browsing between a web server and a user device;
FIG. 2 depicts a method according to one embodiment of the present invention;
FIG. 3 depicts a method according to one embodiment of the present invention;
FIG. 4 depicts a high-level block diagram of a communication network including multiple proxy servers facilitating web browsing between multiple web servers and multiple user devices; and
FIG. 5 depicts a high-level block diagram of a general-purpose computer suitable for use in performing the functions described herein.

To facilitate understanding, identical reference numerals have been used, where possible, to designate identical elements that are common to the figures.

### DETAILED DESCRIPTION OF THE INVENTION

The present invention provides safer Internet browsing by transferring the risk of security exploits from user devices to proxy servers. The present invention prevents infected web pages from being executed locally on user devices that may contain sensitive information; rather, at the proxy server, an image-based representation of the web page (denoted herein as a web page snapshot) is generated from the web page and provided to the user device for presentation to a user. In other words, the present invention enables a user to remotely process/execute a web page within a proxy server in order to prevent malicious code from being executed on the user device (rather, the malicious code is confined within the proxy server).

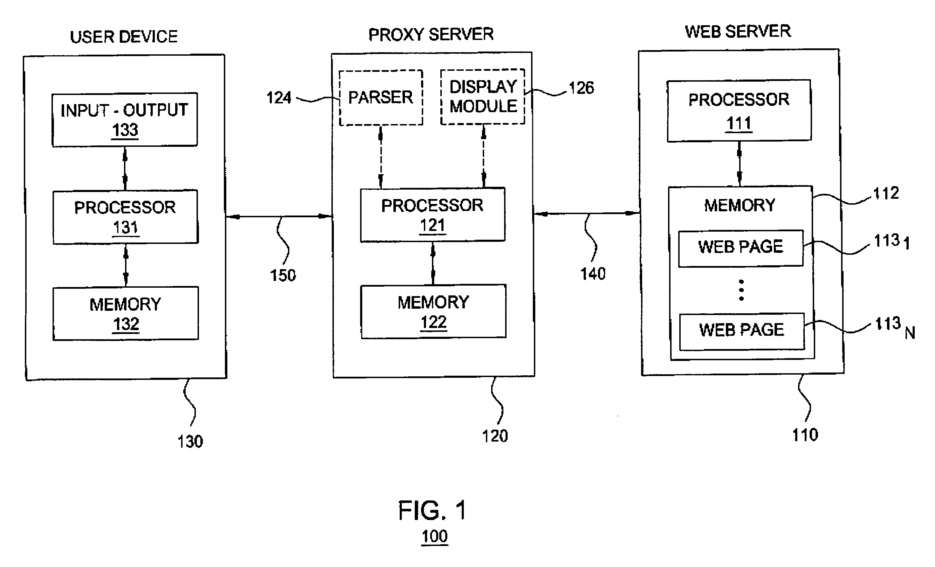

FIG. 1 depicts a high-level block diagram of a communication network-Specifically, communication network 100 includes a web server (WS) 110, a proxy server (PS) 120, and a user device (UD) 130. The WS 110 and PS 120 communicate using a communication path (CP) 140. The PS 120 and UD 130 communicate using a communication path (CP) 150. In one embodiment, CP 150 may be a secure communication path. Although omitted for purposes of clarity, communications between WS 110 and PS 120 and communications between PS 120 and UD 130 may be supporting using any networking technology.

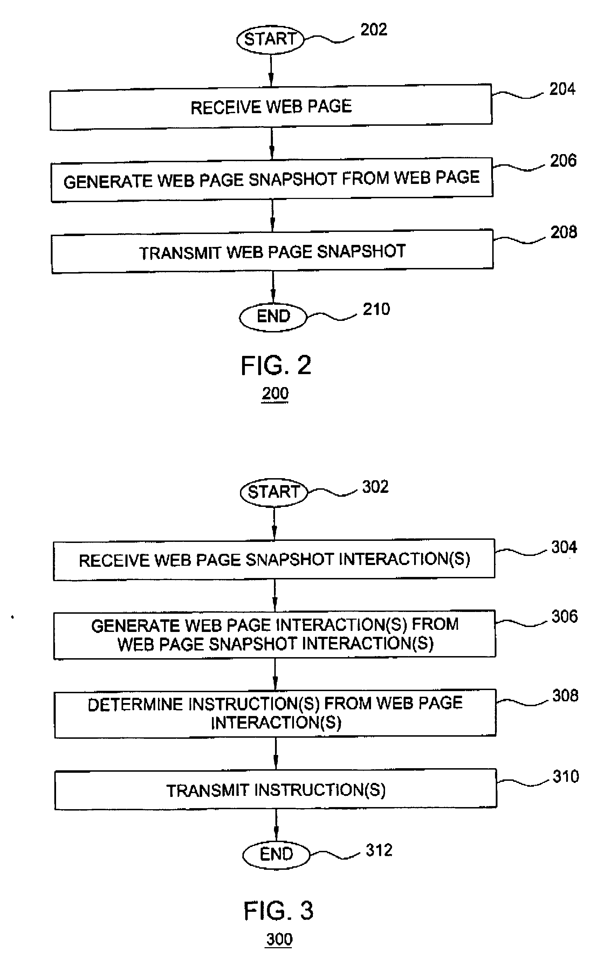

As depicted in FIG. 1, WS 110 includes any device adapted for hosting web pages and providing web pages in response to requests for web pages. The WS 110 includes a processor 111 and a memory 112 (among other components which have been omitted for purposes of clarity, such as transmitter/receiver modules and the like). The WS 110 hosts a plurality of web pages (WPs) 113₁ - 113_{N} (collectively, WPs 113); specifically, memory 112 stores WPs 113. The WS 110 receives requests for WPs 113 from PS 120 over session 140. The WS 110 provides requested ones of WPs 113 to PS 120 over session 140. In one embodiment, WS 110 includes authentication capabilities (including device authentication, login authentication, and the like). The operation of WS 110 in performing various functions of the present invention may be better understood with respect to FIG. 2 and FIG. 3.

The WPs 113, hosted by WS 110, include any web pages. The WPs 113 may include web pages of any format, such as web pages structured using Hypertext Markup Language (HTML), Dynamic HTML (DHTML), Extensible HTML (XHTML), and the like, as well as various combinations thereof. A web page may include combinations of many types of information. For example, WPs 113 may include content and code. The web page information may be organized using information structures (which may depend on factors such as the format of the web page (e.g., HTML vs. XML), the type of content included in the web page, and like factors, as well as various combinations thereof.

As described herein, WPs 113 may include content and code. The web page content may include various combinations of information such as textual information, static images, animated images, audio, video, multimedia, interactive information (e.g., interactive text, interactive illustrations, hyperlinks, buttons, forms, and the like), and the like, as well as various combinations thereof. The web page content may include static information structures and/or dynamic information structures. The web page code may include code adapted for presenting the content (i.e., code defining the content and how the content is to be presented), software code (e.g., scripts, programs, and the like), and the like, as well as various combinations thereof.

The PS 120 includes any server adapted for performing various functions of the present invention. The PS 120 is adapted for generating web page snapshots from corresponding web pages, thereby preventing malicious code from reaching UD 130. The PS 120 is adapted for generating web page interactions from corresponding web page snapshot interactions, thereby enabling a user of UD 130 to interact with web page snapshots such that the user may continue to interact with web pages even though only web page snapshots are provided to UD 130. The PS 120 includes a processor 121 and a memory 122. In one embodiment, PS 120 optionally includes a parser 124. In one embodiment, PS optionally includes a display module 126.

In the direction from WS 110 to UD 130, PS 120 is adapted to receive a web page from WS 110, generate a web page snapshot from the web page, and provide the web page snapshot to UD 130. The PS 120 may generate web page snapshots from corresponding web pages using one or more of a number of different techniques. In one embodiment, PS 120 generates a web page snapshot from a web page by parsing an information stream conveying the web page. In one embodiment, PS 120 generates a web page snapshot from a web page by executing the web page. In one embodiment, PS 120 executes the web page in memory. In one embodiment, PS 120 executes the web page by displaying the web page (e.g., using a web browser and an associated display device). The operation of PS 120 in generating a web page snapshot from a web page may be better understood with respect to FIG. 2 and FIG. 3.

A web page snapshot is a representation of a web page. A web page snapshot is an image-based representation of a web page. A web page includes web page content (e.g., text, audio, video, multimedia, and the like) and web page code (or code). A web page snapshot includes the web page content of the web page without including any code of the web page, thereby confining code (which may include malicious code) to PS 120 in order to prevent malicious code from being propagated to UD 130. A web page snapshot may be generated from a web page using any of a number of techniques for generating an image-based representation of a web page.

A web page may be implemented using any web page format. For example, a web page may be implemented using Hypertext Markup Language (HTML), Dynamic HTML (DHTML), Extensible Hypertext Markup Language (XHTML), and the like, and the like, as well as various combinations thereof. A web page snapshot may be implemented using any image-based format. For example, a web page snapshot may be implemented using Graphics Interchange Format (GIF), Joint Photographic Experts Group (JPEG), Moving Picture Experts Group (MPEG), and the like, as well as various combinations thereof.

In one embodiment, PS 120 generates a web page snapshot from a web page by parsing an information stream conveying the web page. In this embodiment, PS 120 receives the information stream conveying the web page from WS 110. The parser 124 of PS 120 parses the information stream in order to generate a web page snapshot from the web page. In one embodiment, the web page snapshot may be immediately provided into a second information stream for UD 130 as the information stream conveying the web page is being parsed. In one embodiment, parser 124 may generate the web page snapshot in memory 122 as the information stream conveying the web page is being parsed. The PS 120 provides the generated web page snapshot into a second information stream for UD 130.

In one embodiment, PS 120 generates a web page snapshot from a web page by executing the web page in memory (illustratively, in memory 122). In this embodiment, PS 120 receives the information stream conveying the web page from WS 110, and PS 120 executes the web page in memory. The PS 120 executes the web page in memory as the web page would be executed in order to display the web page, but PS 120 does not actually display the web page; rather, the executed web page is stored in memory). The PS 120 generates a web page snapshot from the executed web page stored in memory. The PS 120 provides the generated web page snapshot into a second information stream for UD 130.

In one embodiment, PS 120 generates a web page snapshot from a web page by executing the web page and, further, displaying the executed web page (illustratively, using display module 126, which may include a web browser and an associated computer display device). In this embodiment, PS 120 receives the information stream conveying the web page from WS 110, and executes and displays the web page. The PS 120 generates a web page snapshot from the displayed web page using an image capture technique (e.g., the web page snapshot may be a screen-shot, a screen-dump, a screen-capture, and the like, as well as various combinations thereof). The PS 120 provides the generated web page snapshot into a second information stream for UD 130.

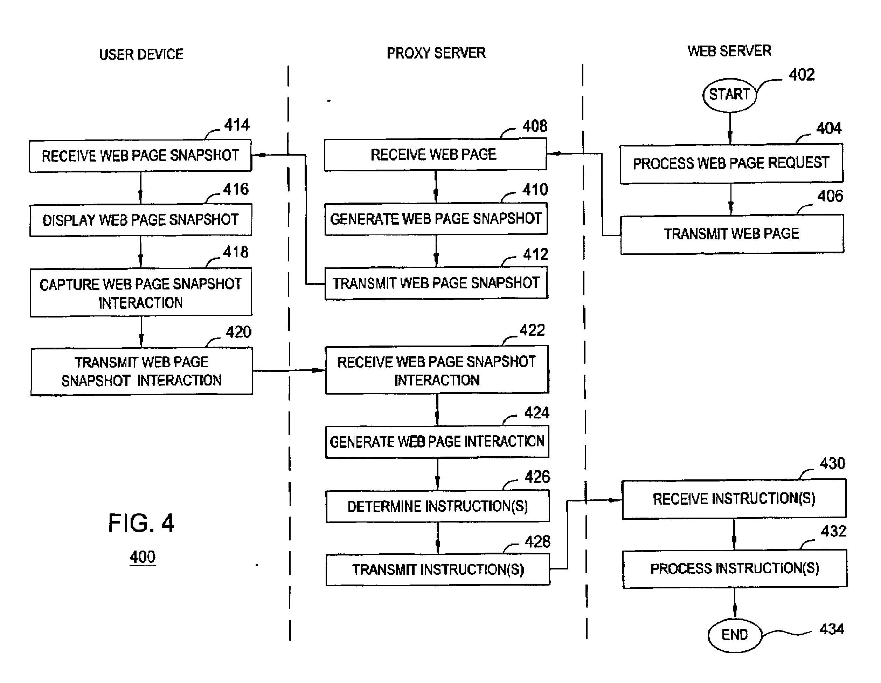

In the direction from UD 130 to WS 110, PS 120 is adapted to receive a web page snapshot interaction from UD 130 and generate a web page interaction from the web page snapshot interaction. The PS 120 may generate web page interactions from corresponding web page snapshot interactions using one or more of a number of different techniques (which may depend on the technique by which PS 120 generates web page snapshots from web pages). The PS 120 determines one or more instructions based on web page interactions. The PS 120 provides the web page instructions (e.g., a request for a web page, a request to store information in the network, a request to complete a transaction, and the like, as well as various combinations thereof) to WS 110. The operation of PS 120 in generating a web page interaction from a corresponding web page snapshot interaction may be better understood with respect to FIG. 3 and FIG. 4.

As described herein, PS 120 is adapted for providing secure web browsing for UD 130 by containing viruses, malware, spyware, and various other forms of malicious code within PS 120, thereby preventing such malicious code from being propagated to UD 130. The PS 120 is implemented in a manner which prevents malicious code of infected web pages from being propagated to UD 130, even enabling infected web pages to be viewed by and interacted on by a user of UD 130 without risking infection to UD 130. The PS 120 may be configured with various different combinations of functions (in addition to generating web page snapshots from web pages and generating web page interactions from web page snapshot interactions) which support secure web browsing in accordance with the present invention.

The PS 120 includes a read-only operating system, thereby preventing malicious code from crashing PS 120. In one embodiment, the operating system of PS 120 is intentionally different than the operating system of UD 130 (creating different environments which make attacks more difficult). The PS 120 does not include applications typically used to replicate and propagate viruses (e.g., e-mail applications, instant messaging applications, and the like), thereby denying malicious code a means of replication and propagation. The PS 120 does not store confidential or critical information, thereby preventing malicious code from deleting or stealing such confidential or critical information.

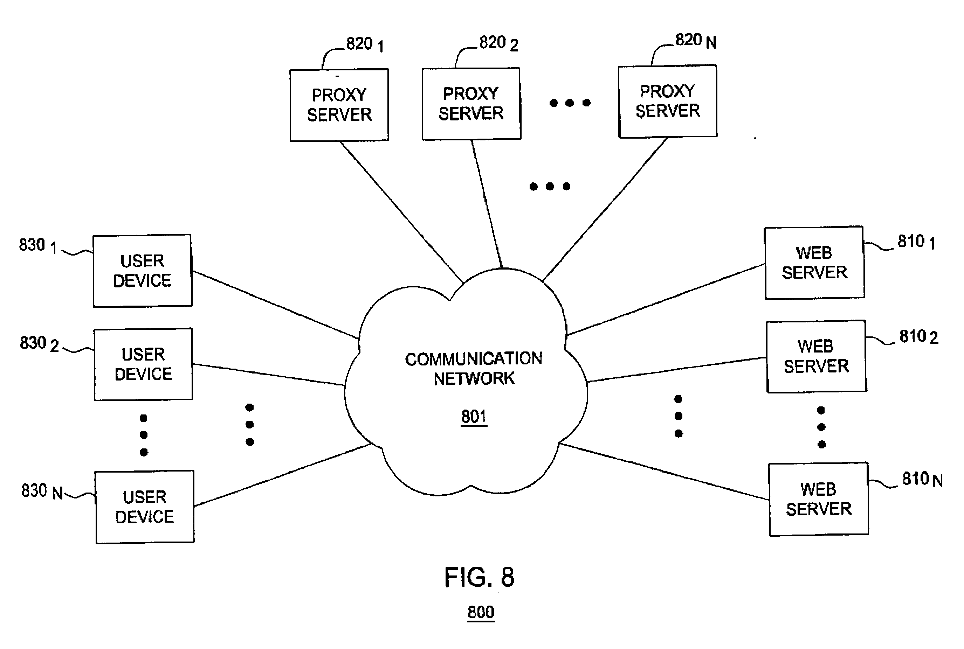

The PS 120 is adapted for flushing (i.e., deleting) malicious code. In one embodiment, PS 120 may be rebooted periodically (e.g., once per hour, once per day, and the like) to remove any malicious code (and any resulting infections). In one embodiment, PS 120 may be rebooted in response to an event (e.g., in response to PS 120 detecting that unexpected or undesired code has been stored on PS 120, in response to a request for a particular web page and/or request for a web page from a particular web server or location, and the like, as well as various combinations thereof). In one embodiment, in which a proxy server is rebooted, user devices in communication with the rebooted proxy server may be seamlessly redirected to one or more other proxy servers, as depicted and described herein with respect to FIG. 8.

In addition to functions of the present invention, PS 120 may also include other forms of protection from malicious code, such as web filters, web anti-virus software, web anti-malware software, web anti-spyware software, protocol verification, website blacklists, and the like, as well as various combinations thereof. In one such embodiment, such forms of protection from malicious code may operate as a first line of defense against web-based attacks. In such embodiments, should the first line of defense fail to stop malicious code from being executed on PS 120, the present invention will ensure that the malicious code executed on PS 120 cannot be propagated to UD 130, thereby ensuring that UD 130 is protected from any and all web-based attacks.

The UD 130 includes any device adapted for requesting, displaying, and interacting with web pages (illustratively, WPs 113 of WS 110). The UD 130 includes a processor 131, a memory 132, and input-output components 133. The input-output components 133 may include content presentation devices (e.g., a display, speakers, and the like), content interaction devices (e.g., a keyboard, a mouse, and the like), and the like, as well as various combinations thereof. The input-output components 133 may include various combinations of hardware and/or software adapted for requesting, displaying, and interacting with web pages. The processor 131, memory 132, and input-output components 133 cooperate to support requesting, displaying, and interacting with web pages. For example, UD 130 may include a desktop or laptop computer, a mobile phone, a personal digital assistant (PDA), and the like.

The UD 130 is adapted for receiving web page snapshots from PS 120 and displaying web page snapshots to a user of UD 130, and for capturing web page snapshot interactions initiated by a user of UD 130 and providing the web page snapshot interactions to PS 120. Using the present invention, a web page snapshot and associated web page snapshot interactions allow display of, and interaction with, a web page at UD 130 without introducing any security risks at UD 130. Since only a representation of the web page is provided to UD 130 (while the actual web page from which the representation is formed is parsed/executed on PS 120), any malicious code embedded within the web page is confined to PS 120 without being passed to UD 130, thereby protecting UD 130 from all malicious code while still enabling the user of UD 130 to view and interact with web pages. The operation of PS 120 in protecting UD 130 may be better understood with respect to FIG. 2, FIG. 3, and FIG. 4.

Although omitted for purposes of clarity, in addition to components of WS 110, PS 120, and UD 130 depicted and described herein, one or more of WS 110, PS 120, and UD 130 may include various other components (e.g., network interface modules, processors, memory, filters, input-output modules, and the like, as well as various combinations thereof) adapted for performing functions in support of the present invention. Although omitted for purposes of clarity, CP 140 and CP 150 may be supported by any number and type of communication network(s) using any networking technology adapted for conveying web pages, web page snapshots, web page snapshot interactions, and web page interactions, and the like, as well as various combinations thereof.

FIG. 2 depicts a method according to one embodiment of the present invention. Specifically, method 200 of FIG. 2 includes a method for receiving a web page from a web server, generating a web page snapshot from the web page, and providing the web page snapshot to a user device, thereby preventing malicious code from being provided from the web server to the user device. The method 200 of FIG. 2 may be used in conjunction with method 300 of FIG. 3 to provide secure web browsing, Although depicted and described as being performed serially, at least a portion of the steps of method 200 of FIG. 2 may be performed contemporaneously, or in a different order than depicted and described with respect to FIG. 2. The method 200 begins at step 202 and proceeds to step 204.

At step 204, a web page is received. The web page is received from a web server. At step 206, a web page snapshot is generated from the received web page. The web page snapshot may be generated from the web page using one or more of a number of different techniques. At step 208, the web page snapshot is transmitted. The web page snapshot is transmitted to the user device which requested the web page from which the web page snapshot is generated. At step 210, method 200 ends.

In one embodiment, the web page snapshot is generated by parsing an information stream conveying the web page. In this embodiment, the information stream may be parsed to identify portions of the information stream conveying web page content and portions of the information stream conveying web page code. In one embodiment, the information stream may then be processed to remove the portions of the information stream conveying web page code, and the remaining portions of the information stream conveying web page content may processed to generate an image-based representation of the webpage (i.e., the web page snapshot).

In one embodiment, the web page snapshot is generated by executing the web page. In one embodiment, the web page is executed in memory but not displayed. In this embodiment, an image-based representation of the web page (i.e., a web page snapshot) is generated from the executed web page by processing the executed web page stored in memory. In one embodiment, the web page is executed in memory and is displayed. In this embodiment, an image-based representation of the web page (i.e., a web page snapshot) is generated from the displayed web page using an image-capture technique (e.g., a screen-shot technique, a screen-dump technique, a screen-capture technique, and the like, as well as various combinations thereof). The web page snapshot may be generated from the web page using any technique for including web page content and excluding web page code.

FIG. 3 depicts a method according to one embodiment of the present invention. Specifically, method 300 of FIG. 3 includes a method for receiving a web page snapshot interaction from a user device, generating a web page interaction from the web page snapshot interaction, determining one or more instructions from the web page interaction, and providing the instruction(s) to a web server. The method 300 of FIG. 3 may be used in conjunction with method 200 of FIG. 2 to provide secure web browsing. Although depicted and described as being performed serially, at least a portion of the steps of method 300 of FIG. 3 may be performed contemporaneously, or in a different order than depicted and described with respect to FIG. 3. The method 300 begins at step 302 and proceeds to step 304.

At step 304, a web page snapshot interaction is received. The web page snapshot interaction is received from the user device on which the associated web page interaction is displayed. At step 306, a web page interaction is generated from the web page snapshot interaction. In one embodiment, the web page interaction is generated by correlating the web page snapshot interaction within the context of the web page snapshot to a corresponding web page interaction within the context of the associated web page.

In one embodiment, the web page interaction is generated by parsing an information stream conveying the web page snapshot interaction. In one embodiment, the web page interaction is generated by implementing the web page snapshot interaction with respect to the generated web page snapshot. In one embodiment, in which the web page snapshot is generated by executing the associated web page in memory but not displaying the web page snapshot, the web page snapshot interaction is implemented with respect to the executed web page snapshot (i.e., in memory) in order to generate the associated web page interaction. In one embodiment, in which the web page snapshot is generated by executing the associated web page in memory and displaying the web page snapshot, the web page snapshot interaction is implemented with respect to the displayed web page snapshot in order to generate the associated web page interaction.

At step 308, at least one instruction is determined from the web page Interaction. In one embodiment, the instruction(s) is determined by implementing the web page interaction. For example, an instruction may include a request for a web page, a request to store information in the network, a request to complete a transaction, and the like, as well as various combinations thereof. At step 310, the instruction(s) is transmitted. The instruction(s) is transmitted to a web server (or possibly to one or more other devices, depending on the web page snapshot interaction initiated by the user of the user device). At step 312, method 300 ends.

FIG. 4 depicts a method according to one embodiment of the present invention, Specifically, method 400 of FIG. 4 includes a method for browsing web pages in a secure manner. The method 400 of FIG. 4 is a combination of methods 200 and 300 of FIG. 2 and FIG. 3, respectively. Although depicted and described as being performed serially, at least a portion of the steps of method 400 of FIG. 4 may be performed contemporaneously, or in a different order than depicted and described with respect to FIG. 4. The method 400 begins at step 402 and proceeds to step 404.

At step 404, a web server processes a web page request. The web page request may be any request received at a web server. For example, a web page request may be a request to refresh a current web page, a request for a different web page, and the like. In one embodiment, the web page request may be received in response to a web page interaction which may specify any of a number of different web transactions, such as requesting a web page by selecting a hyperlink using a mouse click, submitting information to a web site by filling in a text entry field and submitting the information using keyboard entries, and the like. In one such embodiment, the web page interaction may be implemented at the proxy server using a corresponding web page snapshot interaction, as depicted and described herein. At step 206, the web server transmits a web page to a proxy server serving the user device for which the web page is intended.

At step 208, the proxy server receives the web page from the web server. The transmitted web page is selected based on the web page request processed by the web server. At step 210, the proxy server generates a web page snapshot from the received web page. The web page snapshot is a representation of the corresponding web page. The web page snapshot includes the web page content of the corresponding web page. The web page snapshot excludes the code of the corresponding web page, thereby preventing any code (which may include malicious code) from being propagated to the user device. At step 412, the proxy server transmits the web page snapshot to the user device. In one embodiment, the proxy server transmits the web page snapshot to the user device using a secure session.

At step 414, the user device receives the web page snapshot from the proxy server. At step 416, the user device displays the web page snapshot. In one embodiment, the user device displays the web page snapshot using a read-only web browser. At step 418, the user device captures an interaction with the web page snapshot (e.g., an interaction initiated by a user of the user device via a web browser in which the web page snapshot is displayed). At step 420, the user device transmits the web page snapshot interaction to the proxy server.

A web page snapshot interaction is a web page interaction initiated via a web page snapshot. A web page snapshot interaction is a representation of a web page interaction (corresponding to the web page interaction which would be captured if the web page was displayed at the user device rather than the web page snapshot). For example, a web page snapshot interaction may include one or more mouse clicks, one or more keyboard entries, and the like, as well as various combinations thereof. The web page snapshot interaction may specify any of a number of different web transactions, such as requesting a web page by selecting a hyperlink via a mouse click, submitting information to a web site by completing a text entry field and submitting the entered information using keyboard entries, and the like, as well as various combinations thereof.

At step 422, the proxy server receives the web page snapshot interaction. At step 424, the proxy server generates a web page interaction. The proxy server generates the web page interaction from the web page snapshot interaction. In other words, an interaction initiated by a user of the user device on a web page snapshot displayed on the user device is converted into an identical interaction on a corresponding web page executed on the proxy server. For example, mouse clicks at specific locations on the web page snapshot are converted into corresponding mouse clicks at corresponding locations on the associated web page, keyboard entries specified on the web page snapshot are converted into corresponding keyboard entries on the web page, and the like, as well as various combinations thereof.

At step 426, the proxy server determines one or more instructions based on the web page interactions. For example, the instruction(s) may be an instruction for the web server to refresh the current web page (e.g., initiated by a mouse click on a web browser REFRESH button) or provide a new web page (e.g., initiated by typing a web address in a web browser address field and pressing ENTER), an instruction for the web server to store information in the network (e.g., storing user profile information, content, and the like in the network), an Instruction to complete a transaction (e.g., to login to a secure website, to purchase an item, and the like), and the like, as well as various combinations thereof. At step 428, the proxy server transmits the instruction(s) to the web server (or alternatively, to a different web server or other device).

At step 430, the web server (or other device, omitted for purposes of clarity) receives the instruction(s) from the proxy server. At step 432, the web server processes the instruction(s) to perform one or more actions indicated by the instruction(s). For example, depending on the instruction(s), the web server may perform actions such as refreshing the current web page, retrieves a requested web page, storing information, and the like, as well as various combinations thereof. The web server provides a web page to the proxy server in response to most instructions (i.e., in which case method 400 would be repeated for the newly provided web page). At step 434, method 400 ends.

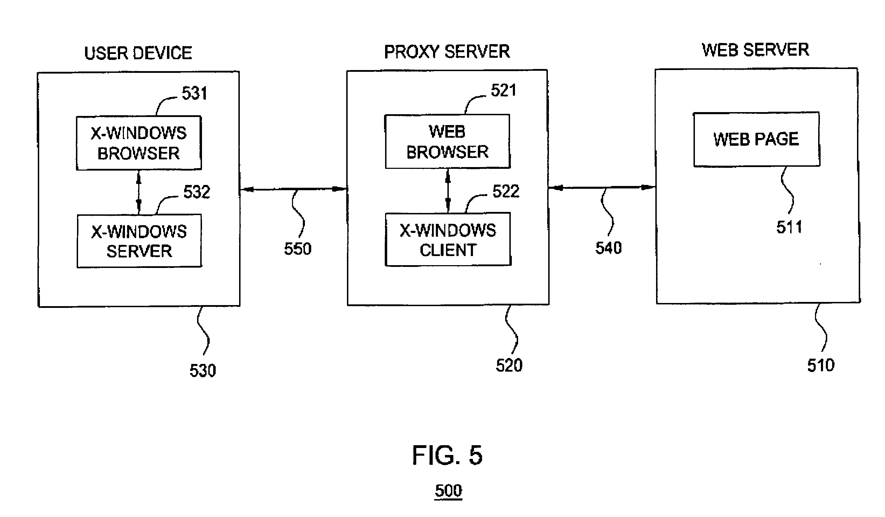

As depicted and described herein, web page snapshots may be generated from web pages and web page interactions may be generated from web page snapshot interactions using a number of different techniques. In one embodiment, in which web page snapshots are generated from web pages by executing the web pages (e.g., in memory, for display, and the like), X-Window functionality may be used to implement the present invention. The use of X-Windows functionality (or like functionality, as described herein) in order to implement the present invention is depicted and described herein with respect to FIG. 5 - FIG. 7.

FIG. 5 depicts a high-level block diagram of a communication network. Specifically, communication network 500 includes a web server (WS) 510, a proxy server (PS) 520, and a user device (UD) 530. As depicted in FIG. 5, WS 510 hosts a web page (WP) 511, PS 520 includes a web browser (WB) 521 and an X-Windows client (XC) 522, and UD 530 includes an X-Windows browser (XB) 531 and an X-Windows server (XS) 532. The WS 510 and PS 520 communicate using a session 540. The session 540 may be a standard browser session. The PS 520 and UD 530 communicate using a session 550. The session 150 may be an X-Windows browser session. Although omitted for purposes of clarity, communications between WS 510, PS 520, and UD 530 may be supported using any networking technology.

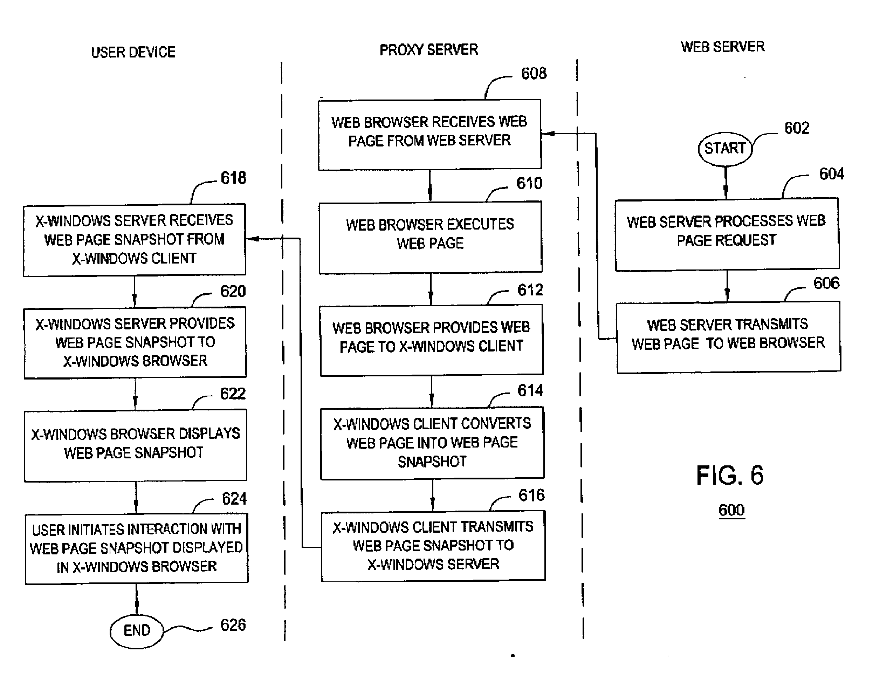

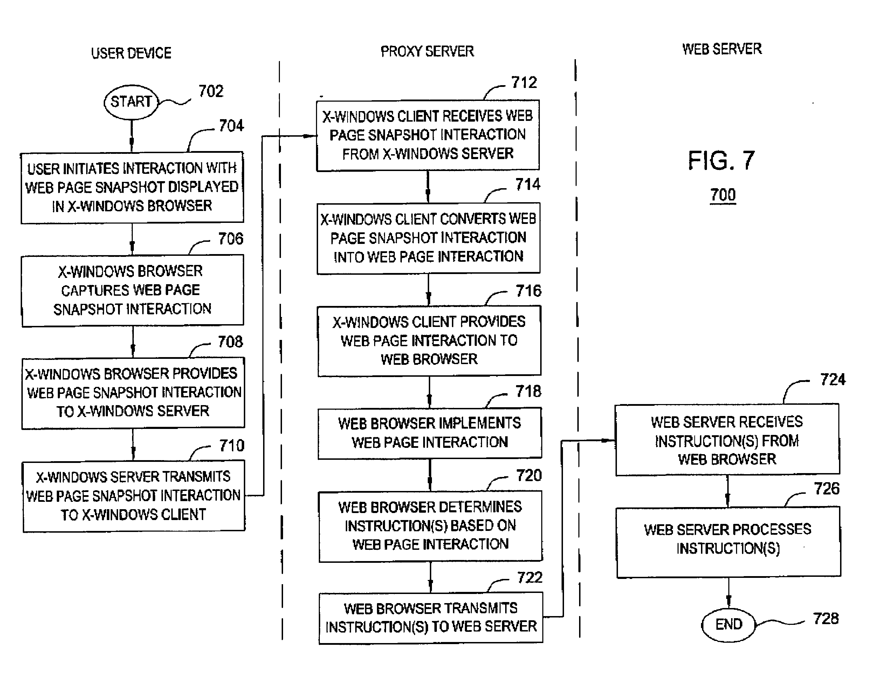

The WS 510 includes any device adapted for hosting web pages and responding to requests for hosted web pages. The WS 510 hosts WP 511. The WP 511 may include any type of web page. As described herein, a web page may include combinations of many types of information (e.g., web page content and web page code). The WS 510 receives requests for web pages (illustratively, WP 511) from WB 521 of PS 520 over session 540. The WS 510 provides requested web pages (illustratively, WP 511) to WB 521 of PS 520 using session 540. In one embodiment, WS 510 may include authentication capabilities (including device authentication, login authentication, and the like, as well as various combinations thereof). The operation of WS 510 in performing various functions of the present invention may be better understood with respect to FIG. 6 and FIG. 7.

The PS 520 includes any server adapted for performing various functions of the present invention. The PS 520 is adapted for generating web page snapshots from corresponding web pages, thereby preventing malicious code from reaching UD 530. The PS 520 is adapted for generating web page interactions from corresponding web page snapshot interactions, thereby enabling a user of UD 530 to interact with web page snapshots such that the user may continue to interact with web pages even though only web page snapshots are provided to UD 530.

The PS 520 includes a web browser (illustratively, WB 521) and an X-Windows-based client (illustratively, XC 522) for performing various functions of the present invention. The PS 520 may be implemented using any server adapted for hosting WB 521 and XC 522. Although omitted for purposes of clarity, PS 520 may include various other components (e.g., processors, memory, network interface modules, applications, functions, and the like, as well as various combinations thereof), for implementing various functions of the present invention. The operation of PS 520, including the operation of WB 521 and XC 522, in performing various functions of the present invention is depicted and described herein with respect to FIG. 5, FIG. 6. and FIG. 7.

The WB 521 operates as a standard web browser supporting display of and interactions with web pages. In the direction from WS 510 to UD 530, WB 521 may receive information from WS 510 (e.g., web pages such as WP 511) using session 540. The WB 521 executes received web pages (i.e., WB 521 processes received web pages and displays the received web pages). The WB 121 provides executed web pages to XC 522 (which generates web page snapshots from web pages, for transmission to XS 532 of UD 530). In the direction from UD 530 to WS 510, WB 521 receives web page interactions from XC 522 (which receives web page snapshot interactions and generates web page interactions for WB 521 from the web page snapshot interactions). The WB 521 implements the web page interactions. The WB 521 determines one or more instructions based on the web page interactions. The WB 521 provides the web page instructions (e.g., a request for a web page, a request to store information in the network, a request to complete a transaction, and the like, as well as various combinations thereof) to WS 510 using session 140.

The XC 522 generates web page snapshots from web pages. In the direction from WS 510 to UD 530, XC 522 receives web pages from WB 521 of PS 520 and generates corresponding web page snapshots from received web pages. The XC 522 provides the web page snapshots to XS 532 of UD 530 over session 550 using standard X-Windows functions. The XC 522 generates web page interactions from web page snapshot interactions. In the direction from UD 530 to WS 510, XC 522 receives web page snapshot interactions from XS 532 of UD 530. The XC 522 generates web page interactions from the received web page snapshot interactions. The XC 522 provides web page Interactions to WB 521 (which implements the web page interactions and determines therefrom one or more instructions to be provided to WS 510 over session 540).

A web page snapshot is an image-based representation of a web page. A web page includes web page content (e.g., text, audio, video, multimedia, and the like) and web page code. A web page snapshot includes the web page content of the web page without including any code of the web page, thereby confining malicious code to PS 520 in order to prevent the malicious code from being propagated to UD 530. In one embodiment of FIG. 5, a web page snapshot is a representation of a web page hosted by a web server (illustratively, WP 111 of WS 110) and executed and displayed by a standard browser of a remote device (illustratively, WB 521 of PS 520). In another embodiment of FIG. 5 (omitted for purposes of clarity), a web page snapshot is a representation of a web page hosted by a web server (illustratively, WP 511 af WS 510) and executed in memory of a remote device.

In the embodiment of FIG. 5, the representation of the web page is an image-based representation of the web page that captures visible items displayed within the web browser (illustratively, WB 521). A web page snapshot may be generated from a displayed web page using any of a number of different techniques for generating a representation of a displayed web page. In one embodiment, the web page snapshot may be generated using any of a number of image capture technologies and techniques. For example, the web page snapshot may be generated using X Windows System (as primarily depicted and described herein), Y Windows System, Fresco/Berlin, and the like, as well as various combinations thereof. The operation of PS 120 in generating web page snapshots from web pages may be better understood with respect to FIG. 6.

For example, the web page snapshot may be a screen-shot, a screen-dump, a screen-capture, and the like, as well as various combinations thereof. The web page snapshot may be a screen-shot in which the entire screen of the web browser (illustratively, WB 521 of PS 520) is output in a format such as a bitmap (BMP), a greymap (GMP), a pixelmap (PMP), and the like, as well as various combinations thereof. The web page snapshot may be a screen-dump in which the web browser (illustratively, WB 521 of PS 520) dumps internal information in a format such as dump image data (DID), portable document format (PDF), and the like, as well as various combinations thereof. The web page snapshot may be a screen-capture in which capture in which the entire screen is captured over a period of time to form a video file.

In one embodiment, in which the present invention is implemented using X-Windows System functionality, the web page snapshot may be a screen-shot in which the entire screen of the web browser is output in a format such as X-Windows bitmap (XBM), X-Windows pixelmap (XPM), or other formats supported by the X-Windows System. In one embodiment, in which the present invention is implemented using X-Windows System functionality, the web page snapshot may be a screen-dump in which the web browser (illustratively, WB 521 of PS 520) dumps internal information in a format such as X-Windows dump image data.

Although primarily described with respect to screen-shots, screen-dumps, and screen-captures, a web page snapshot may be implemented using various other image capture techniques. Although primarily depicted and described with respect to specific formats in which a web page may be captured to form a web page snapshot, web pages may be captured to form web page snapshots in various other formats. For example, depending on the technology used to implement the present invention (which may be something other than the X Windows System), web page snapshots may be represented using other image formats such as Portable Bitmap (PBM), Portable Greymap (PGM), Portable Pixelmap (PPM), Portable Network Graphics (PNG), Cartesian Perceptual Compression (CPC), Extended Dynamic Range (EXR), and the like, as well as various combinations thereof.

As described herein, a web page snapshot interaction is an interaction (e.g., mouse click, keyboard entry, and the like, as well as various combinations thereof) with a web page snapshot. A web page snapshot interaction is a representation of an associated web page interaction. For example, a mouse click, keyboard entry, or other interaction performed on a web page snapshot is translated into a corresponding mouse click, keyboard entry, or other interaction that can be implemented on a corresponding web page. In one embodiment, web page interactions may be generated from web page snapshot interactions using X-Windows-based functions. The operation of PS 120 in generating web page interactions from web page snapshot interactions may be better understood with respect to FIG. 7.

As described herein, similar to PS 120 of FIG. 1, PS 520 of FIG. 5 is adapted for providing secure web browsing for UD 530 by containing viruses, malware, spyware, and various other forms of malicious code within PS 520, thereby preventing such malicious code from being propagated to UD 530. The PS 520 is implemented in a manner which prevents malicious code of infected web pages from being propagated to UD 530, even enabling infected web pages to be viewed by and interacted on by a user of UD 530 without risking infection to UD 530. As described herein, similar to PS 120 of FIG. 1, PS 520 of FIG. 5 may be configured with various different combinations of functions which support secure web browsing in accordance with the present invention.

The PS 520 may include a read-only operating system. The operating system of PS 520 may be different than the operating system of UD 530. The PS 520 may exclude applications typically used to replicate and propagate viruses. The PS 520 does not store confidential or critical information. The PS 520 is adapted for flushing any such code from PS 520. In one embodiment, PS 520 may be rebooted periodically, in response to an event, and the like, as well as various combinations thereof. In one embodiment, in which a proxy server is rebooted, user devices in communication with the rebooted proxy server may be seamlessly redirected to one or more other proxy servers, as depicted and described herein with respect to FIG. 8.

In addition to functions of the present invention, PS 520 may also include other existing forms of protection from malicious code, such as web filters, web anti-virus software, web anti-malware software, web anti-spyware software, protocol verification, website blacklists, and the like, as well as various combinations thereof. In one such embodiment, such existing forms of protection from malicious code may operate as a first line of defense against web-based attacks. In such embodiments, should the first line of defense fails to stop malicious code from being executed on PS 520, the present invention will ensure that the malicious code executed on PS 520 cannot be propagated to UD 530, thereby ensuring that UD 530 is protected from any and all web-based attacks.

The UD 530 includes any device adapted for requesting, displaying, and interacting with web pages (illustratively, WP 511 of WS 510). The UD 530 may include content presentation devices (e.g., displays, speakers, and the like, as well as various combinations thereof). The UD 530 may include interaction devices (e.g., a keyboard, a mouse, and the like, as well as various combinations thereof). For example, UD 530 may include a desktop or laptop computer, a mobile phone, a personal digital assistant (PDA), and the like, as well as various combinations thereof. Although a more detailed description of UD 530 follows, the operation of UD 530, including XB 531 and XS 532, in performing various different functions of the present invention may be better understood with respect to FIG. 6 and FIG. 7.

The XB 531 is an X-Windows-based browser (although comparable browsers may be used in order to implement the present invention). The XB 531 is adapted for displaying web page snapshots to a user of UD 530. In the direction from PS 520 to UD 530, a web page snapshot is received by XS 532 from XC 522 of PS 520 using session 550. The received web page snapshot is provided from XS 532 to XB 531. The XB 531 is adapted for capturing web page snapshot interactions initiated by a user of UD 530. In the direction from UD 530 to PS 520, a web page snapshot interaction is captured by XB 531 and provided to XS 532 for transmission to XC 522 of PS 520 using session 550.

The XS 532 is an X-Windows-based server (although comparable servers may be used in order to implement the present invention). In the direction from PS 520 to UD 530, XS 532 is adapted for receiving web page snapshots from XC 522 of PS 520 using session 550. The XS 532 provides the received web page snapshots to XB 531 for presentation to a user of UD 530 using XB 531. In the direction from UD 530 to PS 520, XS 532 is adapted for capturing web page snapshot interactions initiated by a user of UD 530 using XB 531. The XS 532 provides captured web page snapshot interactions to XC 522 of PS 520 using session 550.

Using the present invention, a web page snapshot and associated web page snapshot interactions allow display of, and interaction with, a web page at UD 530 without introducing any security risks at UD 530. Since only a representation of the web page is provided to UD 530 (while the actual web page from which the representation is formed is implemented on PS 520), any malicious code embedded within the web page is confined to PS 520 without being passed to UD 530, thereby protecting UD 530 from all malicious code while still enabling the user of UD 530 to view and interact with web pages. The operation of PS 520 in protecting UD 530 may be better understood with respect to FIG. 6 and FIG. 7.

Although omitted for purposes of clarity, those skilled in the art will appreciate that, in addition to WB 521 and XC 522, PS 520 may include various other components (e.g., processors, memory, filters, input-output modules, and the like, as well as various combinations thereof) adapted for transmitting and receiving information, generating web page snapshots from web pages, generating web page interactions from web page snapshot interactions, containing and eliminating malicious code, and performing other functions of the present invention. Similarly, although omitted for purposes of clarity, those skilled in the art will appreciate that, in addition to XB 531 and XS 532, UD 530 may include various other components (e.g., processors, memory, network interface modules, input-output modules, and the like, as well as various combinations thereof) adapted for receiving, displaying, and interacting with web page snapshots.

FIG. 6 depicts a method according to one embodiment of the present invention. Specifically, method 600 of FIG. 6 includes a method for receiving a web page from a web server, generating a web page snapshot from the received web page, and providing the web page snapshot to a user device, thereby preventing malicious code from being provided from the web server to the user device. The method 600 of FIG. 6 may be used in conjunction with method 700 of FIG. 7 to provide secure web browsing. Although depicted and described as being performed serially, at least a portion of the steps of method 600 of FIG. 6 may be performed contemporaneously, or in a different order than depicted and described with respect to FIG. 6. The method 600 begins at step 602 and proceeds to step 604.

At step 604, a web server processes a web page request. The web page request may be any request received at a web server. For example, a web page request may be a request to refresh a current web page, a request for a different web page, and the like. In one embodiment, the web page request may be received in response to a web page interaction which may specify any of a number of different web transactions, such as requesting a web page by selecting a hyperlink using a mouse click, submitting information to a web site by filling in a text entry field and submitting the information using keyboard entries, and the like. In one such embodiment, the web page interaction may be implemented at the proxy server using a corresponding web page snapshot interaction, as depicted and described herein with respect to FIG. 7.

At step 606, the web server transmits a web page to a web browser of a proxy server. At step 608, the web browser of the proxy server receives the web page from the web server. The transmitted web page is selected based on the web page request processed by the web server. The web page is communicated from the web server to the proxy server using a standard browser session between the web server and the proxy server. The web browser is a standard web browser supported by the proxy server. At step 610, the web browser executes the web page, which includes web page content and code. The web browser displays the content. The web browser executes the code embedded within the web page.

At step 612, the web browser of the proxy server provides the web page to an X-Windows client of the proxy server. At step 614, the X-Windows client of the proxy server generates a web page snapshot from the received web page. The web page snapshot is a representation of the corresponding web page. The web page snapshot includes the web page content of the corresponding web page. The web page snapshot does not include the code of the corresponding web page, thereby preventing any malicious code from being propagated to the user device. In one embodiment, conversion of the web page into the web page snapshot is performed using X-Windows functionality.

At step 616, the X-Windows client of the proxy server transmits the web page snapshot to an X-Windows server of a user device. In one embodiment, the X-Windows client of the proxy server transmits the web page snapshot interaction to the X-Windows server of the user device using a secure web browsing session. In one embodiment, the secure web browsing session is an X-Windows-based web browsing session. At step 618, the X-Windows server of the user device receives the web page snapshot from the X-Windows client of the proxy server. At step 620, the X-Windows server of the user device provides the web page snapshot to an X-Windows browser of the user device. At step 622, the X-Windows browser displays the web page snapshot. At step 624, a user initiates a web page interaction with the web page snapshot displayed in the X-Windows browser (which is processed as depicted and described herein with respect to FIG. 7). At step 626, method 200 ends.

FIG. 7 depicts a method according to one embodiment of the present invention. Specifically, method 700 of FIG. 7 includes a method for receiving a web page snapshot interaction from a user device, generating a web page interaction from the web page snapshot interaction, determining one or more instructions from the web page interaction, and providing the instruction(s) to a web server. The method 700 of FIG. 7 may be used in conjunction with method 600 of FIG. 6 to provide secure web browsing. Although depicted and described as being performed serially, at least a portion of the steps of method 700 of FIG. 7 may be performed contemporaneously, or in a different order than depicted and described with respect to FIG. 7. The method 700 begins at step 702 and proceeds to step 704.

At step 704, a user initiates a web page interaction with a web page snapshot displayed in an X-Windows browser of a user device. At step 706, the X-Windows browser captures the web page snapshot interaction. The web page snapshot interaction is a web page interaction initiated using a web page snapshot. For example, a web page snapshot interaction may include one or more mouse clicks, one or more keyboard entries, and the like, as well as various combinations thereof. The web page snapshot interaction may specify any of a number of different web transactions, such as requesting a web page by selecting a hyperlink using a mouse click, submitting information to a web site by completing a text entry field using keyboard entries and submitting the information using the keyboard, and the like, as well as various combinations thereof.

At step 708, the X-Windows browser of the user device provides the web page snapshot interaction to an X-Windows server of the user device. At step 710, the X-Windows server of the user device transmits the web page snapshot interaction to an X-Windows client of a proxy server. In one embodiment, the X-Windows server of the user device transmits the web page snapshot interaction to an X-Windows client of a proxy server using a secure web browsing session. In one embodiment, the secure web browsing session is an X-Windows-based web browsing session. At step 712, the X-Windows client of the proxy server receives the web page snapshot interaction from the X-Windows server of the user device.

At step 714, the X-Windows client generates a web page interaction from the web page snapshot interaction. In other words, an interaction initiated by a user of the user device on a web page snapshot displayed on the user device is converted into an identical interaction on a corresponding web page displayed on the proxy server. For example, mouse clicks at specific locations on the web page snapshot are converted into corresponding mouse clicks at corresponding locations on the associated web page, keyboard entries specified on the web page snapshot are converted into corresponding keyboard entries on the web page, and the like, as well as various combinations thereof.

At step 716, the X-Windows client provides the web page interaction to a web browser of the proxy server. At step 718, the web browser implements the web page interaction. The web page interaction may be one or more mouse clicks, one or more keyboard entries, and the like, as well as various combinations thereof, and may specify any of a number of different web transactions, such as requesting a web page by selecting a hyperlink using a mouse click, submitting information to a web site by completing a text entry field using keyboard entries and submitting the information using the keyboard or a mouse click, and the like, as well as various combinations thereof. For example, a mouse click at a particular location on the web page snapshot displayed on the X-Windows browser of the user device is implemented as a mouse click at that location on the web page displayed on the web browser of the proxy server.

At step 720, the web browser determines one or more Instructions based on the web page interactions. For example, the instruction(s) may be an instruction for the web server to refresh the current web page (e.g., initiated by a mouse click on a web browser REFRESH button) or provide a new web page (e.g., initiated by typing a web address in a web browser address field and pressing ENTER), an instruction for the web server to store information in the network (e.g., storing user profile information, content, and the like in the network), an instruction to complete a transaction (e.g., to login to a secure website, to purchase an item, and the like), and the like, as well as various combinations thereof.

At step 722, the web browser transmits the instruction(s) to a web server. At step 724, the web server receives the instruction(s) from the web browser. At step 726, the web server processes the instruction(s) to perform one or more actions indicated by the instruction(s). For example, depending on the instruction(s), the web server may perform actions such as refreshing the current web page, retrieves a requested web page, and the like, as well as various combinations thereof. The web server provides a web page to the proxy server in response to most instructions (e.g., a refreshed web page, a requested web page, a confirmation web page, and the like). The web server transmits a web page in response to the instruction(s) as depicted and described herein with respect to FIG. 2. At step 728, method 300 ends.

Although primarily depicted and described herein with respect to X-Windows System functionality (X-Windows; i.e., X11, as well as various other versions of and extensions to X11), the present invention may be implemented using various other technologies adapted for generating web page snapshots from web pages, capturing interactions with web page snapshots, and generating web page interactions from web page snapshot interactions in order to facilitate secure web browsing. For example, such other technologies may include technologies compatible with the X Windows System, alternative technologies providing functionality similar to the X-Windows System (e.g., Y Windows System, Fresco/Berlin, and the like), and the like, as well as various combinations thereof.

Although primarily depicted and described with respect to one proxy server, networks may include multiple proxy servers which may be deployed using load-balancing applications. The deployment of multiple proxy servers supporting functions depicted and described with respect to PS 120 ensures that proxy servers may be periodically rebooted, or shut down in response to a malicious attack, without affecting users of user devices communicating using that rebooted or shut down proxy server. A network including multiple proxy servers which facilitate web browsing between multiple web servers and multiple user devices is depicted and described herein with respect to FIG. 8.

FIG. 8 depicts a high-level block diagram of a communication network. Specifically, communication network 800 includes a plurality of web servers (WSs) 810₁ - 810_{N} (collectively, WSs 810), a plurality of proxy servers (PSs) 820₁ - 820_{N} (Collectively, PSs 820), and a plurality of user devices (UDs) 830₁ - 830_{N} (collectively. UDs 830). The WSs 810 may serve any of the UDs 830 using any of the PSs 820. The WSs 810 may operate in a manner similar to WS 110 of FIG. 1 and/or WS 510 of FIG. 5. The PSs 820 may operate in a manner similar to PS 120 of FIG. 1 and/or PS 520 of FIG. 5, and may include additional load-balancing functionality as described herein. The UDs 830 may operate in a manner similar to UD 130 of FIG. 1 and/or UD 530 of FIG. 5.

Using the present invention, malicious code included within a web page is contained within the proxy server serving the user device for which that web page is intended (rather than being transferred to and executed on the user device). In one embodiment, in a network implementing the present invention, in order to maintain the security, stability, and reliability of each PS 820, each PS 820 may be rebooted and/or shut down for various reasons. In one embodiment, each PS 820 may be rebooted and/or shut down periodically. In one embodiment, any PS 820 may be rebooted and/or shut down in response to detecting malicious code included within a web page. In one embodiment, any PS 820 may be rebooted and/or shut down in response to detecting a request for particular web page. The PSs 820 may be rebooted and/or shut down for various other reasons.

As described herein, when one of the PSs 820 is rebooted or shut down (or is about to be rebooted or shut down), any existing sessions associated with that PS 820 are transferred to one or more of the other PSs 820. The existing sessions which may be transferred from an inactive PS 820 (or soon to be inactive PS 820) to an active PS 820 include any communication sessions between the inactive PS 820 and any of the WSs 810 serving the inactive PS 820 (similar to session 140 and/or session 540 depicted and described herein with respect to FIG. 1 and FIG. 5, respectively) and any communication sessions between the inactive PS 820 and any of the UDs 830 being served by the inactive PS 820 (session 150 and/or session 550 depicted and described herein with respect to FIG. 1 and FIG. 5, respectively).

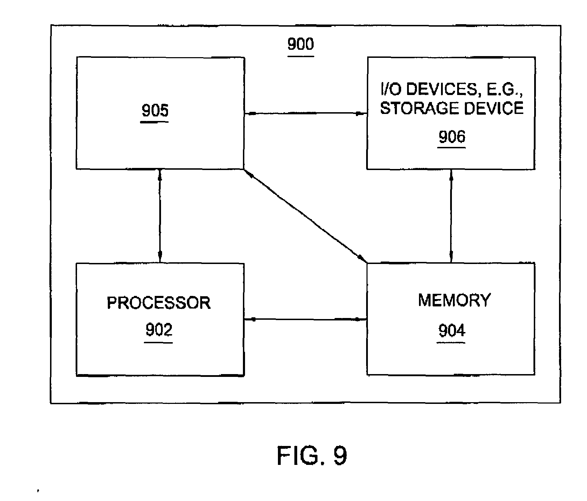

FIG. 9 depicts a high-level block diagram of a general-purpose computer suitable for use in performing the functions described herein. As depicted in FIG. 9, system 900 includes a processor element 902 (e.g., a CPU), a memory 904, e.g., random access memory (RAM) and/or read only memory (ROM), a web browsing module 905 (which may be implemented on a web server, a proxy server, or a user device as described herein), and various input/output devices 906 (e.g., storage devices, including but not limited to, a tape drive, a floppy drive, a hard disk drive or a compact disk drive, a receiver, a transmitter, a speaker, a display, an output port, and a user input device (such as a keyboard, a keypad, a mouse, and the like)).

It should be noted that the present invention may be implemented in software and/or in a combination of software and hardware, e.g., using application specific integrated circuits (ASIC), a general purpose computer or any other hardware equivalents. In one embodiment, the present web browsing process 905 can be loaded into memory 904 and executed by processor 902 to implement the functions as discussed above. As such, web browsing process 905 (including associated data structures) of the present invention can be stored on a computer readable medium or carrier, e.g., RAM memory, magnetic or optical drive or diskette and the like.

It is contemplated that some of the steps discussed herein as software methods may be implemented within hardware, for example, as circuitry that cooperates with the processor to perform various method steps. Portions of the present invention may be implemented as a computer program product wherein computer instructions, when processed by a computer, adapt the operation of the computer such that the methods and/or techniques of the present invention are invoked or otherwise provided. Instructions for invoking the inventive methods may be stored in fixed or removable media, transmitted via a data stream in a broadcast or other signal bearing medium, and/or stored within a working memory within a computing device operating according to the instructions.

Although various embodiments which incorporate the teachings of the present invention have been shown and described in detail herein, those skilled in the art can readily devise many other varied embodiments that still incorporate these teachings.

## Claims

1. A method for protecting a user device from web attacks, comprising:
receiving a web page comprising web page content and code;
generating an image-based representation of the web page that includes the web page content and excludes the code; and
propagating the image-based representation of the web page toward the user device.

2. The method of claim 1, wherein generating the image-based representation of the web page comprises:
parsing an information stream conveying the web page to remove the code therefrom.

3. The method of claim 1, wherein generating the image-based representation of the web page comprises:
executing the received web page in a memory; and
generating an image-based representation of the executed web page.

4. The method of claim 1, wherein generating the image-based representation of the web page comprises:
executing the received web page using a first type of web browser; and
generating an image-based representation of the executed web page.

5. The method of claim 4, wherein generating the image-based representation of the executed web page comprises:
capturing the image-based representation of the executed web page using one of a screen-shot, a screen-dump, and a screen-capture.

6. The method of claim 1, further comprising:
receiving, at the user device, the image-based representation of the web page; and
presenting the image-based representation of the web page.

7. The method of claim 6, further comprising:
capturing, at the user device, an interaction with the image-based representation of the web page; and
propagating the interaction with the image-based representation of the web page toward a proxy server.

8. The method of claim 7, further comprising:
receiving, at the proxy server, the interaction with the Image-based representation of the web page;
generating a web page interaction from the interaction with the image-based representation of the web page: and
implementing the web page interaction.

9. An apparatus for protecting a user device from web attacks, comprising:
means for receiving a web page comprising web page content and code;
means for generating an image-based representation of the web page that includes the web page content and excludes the code; and
means for propagating the image-based representation of the web page toward the user device.

10. A computer readable medium storing a software program, that, when executed by a computer, causes the computer to perform a method comprising:
receiving a web page comprising web page content and code;
generating an image-based representation of the web page that includes the web page content and excludes the code; and
propagating the image-based representation of the web page toward a user device.
